**Europäisches Patentamt**

(19) **European Patent Office**

**Office européen des brevets**

(11) Veröffentlichungsnummer: **0 076 988**
**B1**

(12) **EUROPÄISCHE PATENTSCHRIFT**

(45) Veröffentlichungstag der Patentschrift:
**16.12.87**

(51) Int. Cl.⁴: **C 08 B 11/193**

(21) Anmeldenummer: **82109107.1**

(22) Anmeldetag: **02.10.82**

(54) **Verfahren zur Herstellung von Celluloseethern.**

(30) Priorität: **14.10.81 DE 3140813**

(43) Veröffentlichungstag der Anmeldung:
**20.04.83 Patentblatt 83/16**

(45) Bekanntmachung des Hinweises auf die Patenterteilung:
**16.12.87 Patentblatt 87/51**

(84) Benannte Vertragsstaaten:
**BE DE FR GB IT NL SE**

(56) Entgegenhaltungen:
**GB-A-654 014**
**US-A-2 137 343**
**US-A-3 446 795**
**US-A-3 709 876**

(73) Patentinhaber: **Wolff Walsrode Aktiengesellschaft,**
**Postfach, D-3030 Walsrode 1 (DE)**

(72) Erfinder: **Balser, Klaus, Dr., Am Badeteich 15,**
**D-3030 Walsrode (DE)**
Erfinder: **Teubner, Helwig, Dr., Kattenstrasse 17,**
**D-6450 Hanau (DE)**
Erfinder: **Oppermann, Wilhelm, Amselsteig 25,**
**D-3036 Bomlitz (DE)**

(74) Vertreter: **Zobel, Manfred, Dr., c/o BAYER AG**
**Konzernverwaltung RP Patentabteilung**
**Bayerwerk, D-5090 Leverkusen (DE)**

EP 0 076 988 B1

**Beschreibung**

Die vorliegende Erfindung betrifft ein Verfahren zur Herstellung von reinweißen Hydroxyethylmethylcellulosen (HEMC), wobei die Alkalisierung der Cellulose in Gegenwart von flüssigem Methylchlorid vorgenommen und die Alkalicellulose mit Ethylenoxid umgesetzt wird.

Aus der DAS 14 68 048 ist es bekannt, Hydroxypropylmethylcellulose in flüssiger Methylchlorid-Phase herzustellen. Dabei werden mindestens 4 Gewichtsteile Methylchlorid pro Gewichtsteil lufttrockener Cellulose während der Einwirkung von Propylenoxid auf Natroncellulose eingesetzt, d.h. pro Mol lufttrockener Cellulose werden mindestens 12,8 Mole Methylchlorid benötigt. Die Alkalisierung erfolgt in einer vorgeschalteten Stufe durch Eintauchen der Celluloseblätter in 30-50 %ige NaOH und anschließend Abpressen der Natronlauge bis zu einem Abpreßgrad von 2,5 - 2,8.

In der US-Patentschrift Nr. 3.709.876 wird die Herstellung von wasserlöslichen Hydroxyethylmethylcellulosen mit verbesserter Widerstandsfähigkeit gegen Enzyme beschrieben, wobei die Alkalisierung der Cellulose und die nachfolgende Veretherung in üblicher Weise vorgenommen wird. Nach Entfernung des Methylchlorids wird die Veretherung mit Ethylenoxid in Gegenwart eines organischen Lösungsmittels durchgeführt. Die Anwesenheit von Methylchlorid in flüssiger Phase wird nicht beschrieben.

Das erfindungsgemäße Verfahren ist dadurch gekennzeichnet, daß sowohl die Alkalisierung der Cellulose als auch die Hydroxyalkylierung in flüssigem Methylchlorid vorgenommen werden, wobei 6 bis 12, vorzugsweise 7 bis 8 Mole Methylchlorid pro Mol lufttrockener Cellulose eingesetzt werden. Die flüssige Methylchloridphase gewährleistet eine gleichmäßige Alkalisierung und Verätherung, da lokale Überhitzungen der Cellulose, d.h. die Bildung von sogenannten Wärmenestern, auf diese Weise vermieden werden.

Als Ausgangsmaterial für das erfindungsgemäße Verfahren werden gemahlene Cellulosen der üblichen Art, wie Bleich-Linters oder Holzzellstoffe, verwendet. Die Cellulose wird entweder vorzugsweise in flüssigem Methylchlorid dispergiert und zur Alkalisierung mit Natronlauge versetzt oder mit Natronlauge besprüht und unmittelbar darauf in Methylchlorid dispergiert. Durch die Alkalisierung in flüssiger Methylchlorid-Phase wird der alkalisch-oxidative Abbau der Cellulose verhindert, wodurch Produkte mit reinweißer Farbe und hoher Viskosität erhalten werden.

Die zur Alkalisierung eingesetzte Menge NaOH sollte im Bereich zwischen 1,2 und 1,4 Molen, vorzugsweise bei 1,35 Molen NaoH pro Mol lufttrockener Cellulose liegen.

Die Temperatur während der Alkalisierung sollte 35°C nicht überschreiten.

Zur Verätherung werden, je nach Höhe des angestrebten molaren Substitutionsgrades (MS), 3 bis 5 Mole, Ethylenoxid pro Mol lufttrockener Cellulose eingesetzt. Mehr Ethylenoxid ergibt Produkte mit besserer Löslichkeit.

Erfindungsgemäß erfolgt die Ethylenoxidzugabe zusammen mit dem Methylchlorid entweder vor, unmittelbar nach oder gleichzeitig mit der Zugabe zur Alkalisierung der verwendeten 30-50 %igen Natronlauge.

Zur Veretherung wird das Reaktionsgemisch auf Temperaturen von 40 - 70°C, vorzugsweise 40-55°C aufgeheizt. Dabei stellen sich Drücke von 9-14 bar ein.

Die Umsetzung wird in Druckgefäßen, gegebenenfalls unter Umrühren des Reaktionsgemisches durchgeführt. Um ein neutrales Reaktionsprodukt zu erhalten, muß die eingesetzte Alkalimenge neutralisiert werden. Dies geschieht am vorteilhaftesten durch Zugabe einer stöchiometrischen Menge einer organischen Säure, wie Ameisensäure, Essigsäure oder Propionsäure, bzw. deren Mischungen. Nach der Verätherung wird das überschüssige Methylchlorid abgezogen, gegebenenfalls unter Unterdruck, und in einer Vorlage gesammelt, von wo es ohne weitere Reinigung für einen Folgeansatz oder zur Herstellung von Methylcellulose bzw. deren hydroxyalkylierten Mischethern eingesetzt werden kann.

Die Reinigung des Rohproduktes erfolgt in bekannter Weise mit Hilfe von üblichen Lösungsmittel/Wassergemischen, wie Methanol/Wasser, Aceton/Wasser oder Methanol/Aceton. Da das nach dem erfindungsgemäßen Verfahren hergestellte Produkt keinen Flockpunkt unter 100°C hat, ist ein Auswaschen mit heißem Wasser nicht möglich. Wenn man dagegen das erhaltene Produkt durch eine partielle Vernetzung in eine zeitlich begrenzte wasserunlösliche Form überführt, kann die Reinigung mit kaltem oder heißem Wasser durchgeführt werden. Diese Vernetzung wird zweckmäßigerweise nach der Neutralisation im schwach-sauren Milieu in Anwesenheit von Methylchlorid mittels einer bifunktionellen Verbindung wie z. B. Glyoxal, bei Temperaturen von 65-80°C vorgenommen. Nach der Wäsche wird das Produkt in üblicher Weise getrocknet und vorzugsweise gemahlen.

Die erhaltenen Produkte werden anhand ihrer analytisch ermittelten Substitutionsgrade (DS und MS) charakterisiert. Diese sind wie folgt definiert:

Jede Anyhdroglukoseeinheit des Cellulosemoleküls hat drei der Reaktion zugängliche OH-Gruppen. Während der durchschnittliche Substitutionsgrad (DS-Wert) die durchschnittliche Anzahl der pro Anhydroglukose substituierten OH-Gruppen angibt, beschreibt der MS-Wert die durchschnittliche Molzahl des Reaktanden, die pro Anhydroglukoseeinheit gebunden ist. Bei Hydroxyalkylderivaten der Cellulose ist der MS-Wert im allgemeinen größer als der DS-Wert. Der Grund hierfür liegt in der Tatsache, daß bei der Einführung einer Hydroxyalkylgruppe in das Cellulosemolekül eine zusätzliche OH-Gruppe gebildet wird, die ebenfalls der Hydroxyalkylierung zugänglich ist. Daraus folgt, daß bei der Hydroxyalkylierung von Cellulose Seitenketten von unterschiedlicher Länge gebildet werden können.

Der Hydroxyethylgehalt der nach dem erfindungsgemäßen Verfahren hergestellten Produkte kann in Abhängigkeit von der eingesetzten Ethylenoxidmenge beliebig eingestellt werden. Als ausreichend für klarlösliche Produkte hat sich ein molarer Substitutionsgrad von wenigstens 1,7, entsprechend einem Gewichtsanteil Hydroxyethylgruppen von 41,5 %, erwiesen.

Durch die gleichzeitig verlaufende geringfügige Methylierung stellen sich Methoxylgehalte von 9 bis 13 Gew.-%, entsprechend DS-Werten von 0,6 bis 0,95, ein.

Entsprechend diesem hohen Hydroxyethylgehalt haben die erfindungsgemäß hergestellten Produkte einem Flockpunkt über 100° C und verhalten sich auch in ihren anwendungstechnischen Eigenschaften wie reine Hydroxyethylcellulose. Sie zeigen gute Lösungseigenschaften in kaltem und heißem Wasser und ergeben klare, farblose Lösungen, deren Viskosität von dem Polymerisationsgrad der eingesetzten Cellulosen abhängt.

Die erfindungsgemäß hergestellten Produkte können überall dort vorteilhaft eingesetzt werden, wo klare, faser- und gelkörperfreie, viskose Lösungen in kaltem oder heißem Wasser benötigt werden, die zudem hervorragend beständig sind gegenüber dem Einfluß ein- und mehrwertiger Kationen und Anionen. Bevorzugte Anwendungsgebiete für die Produkte bestehen im Einsatz als Hilfsmittel bei Erdöl und Erdgasbohrungen sowie in dispersionsgebundenen wäßrigen Systemen (Dispersionsfarben).

### Beispiel 1

9.100 g gemahlene Bleich-Linters werden in einem Autoklaven von 150 l Inhalt vorgelegt und mit 6.059 g 50 %iger Natronlauge besprüht. Danach werden unter gleichmäßigem Rühren 22.664 g Methylchlorid zugegeben, und anschließend 30 Minuten lang in Methylchlorid alkalisiert.

Durch Kühlung wird die Temperatur bei 30 bis 35° C gehalten. Sodann erfolgt Zugabe von 12.342 g Ethylenoxid. Die Temperatur wird auf 40° C erhöht und 3 Stunden dabei belassen. Es stellt sich ein Druck von ca. 9 bar ein. Nach beendeter Verätherung werden zur Neutralisation des in dem Roh-Produkt erhaltenen Alkalis 4.544 g Eisessig in den Autoklaven gedrückt. Zur Vernetzung werden 1.047 g Glyoxal (40 gewichtsprozentig) zugegeben und die Temperatur auf 70° C erhöht, bei der das Reaktionsgemisch für 30 Minuten belassen bleibt.

Anschließend wird das Methylchlorid in eine Vorlage abgeblasen, dann wird evakuiert. Das Reaktionsprodukt wird dann mit kaltem Wasser salzfrei gewaschen und anschließend getrocknet und gemahlen.

Von den ursprünglich 22.664 g Methylchlorid werden 19.477 g zurückgewonnen. Diese werden mit 3.187 g frischem Methylchlorid ergänzt und für einen weiteren Ansatz eingesetzt.

Die so hergestellte HEMC stellt ein weißes, pulveriges Produkt dar, das mit Wasser eine homogene Lösung bildet. Eine 2 gewichtsprozentige Lösung hat eine Viskosität von 53.000 mPa.s, gemessen im Rotationsviskosimeter bei einem Schergefälle von $D = 2,93$ sec$^{-1}$, ihr pH-Wert beträgt 7,8. Der DS bezüglich $OCH_3$ beträgt 0,93, der MS bezüglich $OC_2H_4OH$ beträgt 1,7.

### Beispiel 2

9.100 g eines gemahlenen, hochviskosen Zellstoffs werden in einem Autoklaven von 150 l Inhalt vorgelegt und mit 6.059 g 50 %iger Natronlauge besprüht. Danach werden gleichzeitig 22,664 g Methylchlorid und 12.342 g Ethylenoxid zugegeben. Anschließend wird 30 Minuten lang in Methylchlorid bei 30 bis 35° C alkalisiert. Die Temperatur wird auf 40° C erhöht und 3 Stunden dabei belassen. Neutralisation und Vernetzung erfolgen wie unter Beispiel 1 angegeben.

Eine 2 gewichtsprozentige Lösung des Produkts hat eine Viskosität von 29.500 mPa.s (Schergefälle $D = 2,93$ sec$^{-1}$), der DS bezüglich $OCH_3$ beträgt 0,94, der MS bezüglich $OC_2H_4OH$ beträgt 1,74.

### Beispiel 3

9.100 g eines gemahlenen, hochviskosen Zellstoffs werden in einem Autoklaven von 150 l Inhalt vorgelegt und gleichzeitig mit 22.664 g Methylchlorid, 6.059 g 50 %iger Natronlauge und 12.342 g Ethylenoxid versetzt. Nach 30-minütigem Alkalisieren bei 30 - 35° C wird die Temperatur auf 55° C erhöht und eine Stunde lang dabei gehalten. Es stellt sich ein Druck von ca. 14 bar ein. Neutralisation und Vernetzung erfolgen wie in Beispiel 1 beschreiben.

Eine 2 gewichtsprozentige Lösung des Produkts hat eine Viskosität von 34.800 mPa.s (Schergefälle $D = 2,93$ sec$^{-1}$), der DS bezüglich $OCH_3$ beträgt 0,89, der MS bezüglich $OC_2H_4OH$ beträgt 1,65.

**Patentansprüche**

1. Verfahren zur Herstellung von Hydroxyethylmethylcellulose, die einen Flockpunkt von mindestens 100°C hat, durch Umsetzen von Alkalicellulose mit Ethylenoxid in Gegenwart von Methylchlorid und Isolierung der Hydroxyethylmethylcellulose in üblicher Weise, dadurch gekennzeichnet, daß man die Alkalisierung und die Hydroxyethylierung in flüssigem Methylchlorid durchführt, wobei das molare Verhältnis von Methylchlorid zu lufttrockener Cellulose 6-12 beträgt und 1,2 - 1,4 Mol NaoH pro Mol lufttrockener Cellulose zur Alkalisierung und 3 bis 5 Mol, Ethylenoxid, pro Mol lufttrockenere Cellulose, verwendet werden und zur Veretherung das Reaktionsgemisch auf 40 - 70°C und bei Drücken von 9-14 bar belassen wird.

2. Verfahren nach Anspruch 1 dadurch gekennzeichnet, daß das molare Verhältnis von Methylchlorid zu lufttrockener Cellulose 7-8 beträgt.

3. Verfahren nach Anspruch 1 oder 2, dadurch gekennzeichnet, daß zur Veretherung das Reaktionsgemisch auf 40-55°C aufgeheizt wird.

**Claims**

1. Process for the production of hydroxyethyl methyl cellulose which has a flocculation point of at least 100°C by reacting alkali cellulose with ethylene oxide in the presence of methyl chloride and isolating the hydroxyethyl methyl cellulose in the customary manner, characterised in that the alkalisation and the hydroxyethylation are carried out in liquid methyl chloride, the molar ratio of methyl chloride to air-dry cellulose being 6-12 and 1.2 - 1.4 mole of NaOH being used per mol of air-dry cellulose for the alkalisation and 3 to 5 moles of ethylene oxide being used per mole of air-dry cellulose and the reaction mixture being left at 40 - 70°C and pressures of 9-14 bars for the etherification.

2. Process according to Claim 1, characterised in that the molar ratio of methyl chloride to air-dry cellulose is 7-8.

3. Process according to Claim 1 or 2, characterised in that the reaction mixture is heated to 40-55°C for the etherification.

**Revendications**

1. Procédé de production d'hydroxyéthylméthylcellulose qui a un point de floculation d'au moins 100°C, par réaction d'alcali-cellulose avec l'oxyde d'éthylène en présence de chlorure de méthyle et isolement de l'hydroxyéthylméthylcellulose par une opération classique, caractérisé en ce qu'on conduit l'alcalinisation et l'hydroxyéthylation dans du chlorure de méthyle liquide, le rapport molaire du chlorure de méthyle à la cellulose desséchée à l'air ayant une valeur de 6-12, et on utilise 1,2 - 1,4 mole de NaOH par mole de cellulose desséchée à l'air pour l'alcalinisation et 3 à 5 moles d'oxyde d'éthylène par mole de cellulose desséchée à l'air, et en vue de l'éthérification, le mélange réactionnel est maintenu à 40 - 70°C et à des pressions de 9 à 14 bars.

2. Procédé suivant la revendication 1, caractérisé en ce que le rapport molaire du chlorure de méthyle à la cellulose desséchée à l'air s'élève à 7-8.

3. Procédé selon la revendication 1 ou 2, caractérisé en ce que, pour l'éthérification, le mélange réactionnel est chauffé à 40 - 55°C.